# EUROPEAN PATENT APPLICATION

(11) **EP 4 160 374 A1**
(43) Date of publication of application: **05.04.2023**
(21) Application number: 22166073.1
(22) Date of filing: 31.03.2022
(51) Int. Cl.: G06F 3/04817, G06F 3/0482, G06F 3/04845, G06F 3/0486, G06T 11/60

(54) **METHOD AND DEVICE FOR DISPLAYING MATERIAL, ELECTRONIC DEVICE AND STORAGE MEDIUM**

(30) Priority: 29.09.2021 CN 202111152578
(71) Applicant: Beijing Dajia Internet Information Technology Co., Ltd., Beijing 100085 (CN)
(72) Inventor: WANG, Xing, Haidian District, 100085 (CN)
(74) Representative: advotec.

(57) **Abstract**

A method for displaying material includes: displaying (S201) an image (5), a target material (2), a material selecting frame (4), and at least one editing control (31, 32, 33, 34) in an image editing area. The at least one editing control (31, 32, 33, 34) is on the material selecting frame (4). The target material (2) is within the material selecting frame (4). In addition, the method includes: in response to a dragging operation of the target material, moving (S203) the target material (2) and the material selecting frame (4) along a trajectory of the dragging operation. Furthermore, the method includes: in a case where a part of the material selecting frame (4) is within the image editing area in response to the dragging operation, displaying (S205) the at least one editing control (31, 32, 33, 34) in the image editing area.

## Description

### TECHNICAL FIELD

The disclosure relates to a field of image technologies, and to a method and a device for displaying material, an electronic device, and a storage medium.

### BACKGROUND

With the development of various image applications, more and more people use the image applications to process images, such as adding favorite materials to an image or editing the materials. For example, the material can be moved to a user-designated position of the image. During the process of moving the material, a material selecting frame may be moved to the outside of a canvas, and function keys on the material selecting frame will be moved to the outside of the canvas correspondingly.

### SUMMARY

According to one aspect, a method for displaying material is provided. The method includes:
displaying an image to be edited, a target material, a material selecting frame, and at least one editing control in an image editing area, in which the at least one editing control is on the material selecting frame and the target material is within the material selecting frame;
in response to a dragging operation of the target material, moving the target material and the material selecting frame along a trajectory of the dragging operation; and
in a case where a part of the material selecting frame is within the image editing area in response to the dragging operation, displaying the at least one editing control in the image editing area.

Optionally, displaying the at least one editing control in the image editing area includes:
displaying the at least one editing control on a first selecting sub-frame;
in which the first selecting sub-frame is the part of the material selecting frame within the image editing area.

Optionally, displaying the at least one editing control on the first selecting sub-frame includes:
in a case where a second selecting sub-frame has an associated editing control, displaying the at least one editing control on the first selecting sub-frame;
in which the second selecting sub-frame is a part of material selecting frame outside the image editing area, and the associated editing control is displayed on the second selecting sub-frame in a case where the second selecting sub-frame is within the image editing area.

Optionally, the material selecting frame is rectangular, the material selecting frame includes four vertices, and the at least one editing control includes respective editing controls associated with the four vertices, displaying the at least one editing control on the material selecting frame includes:
displaying the respective editing controls on the four vertices.

Optionally, the image editing area is rectangular, the first selecting sub-frame includes a first vertex and a second vertex among four vertices, and the second selecting sub-frame includes a third vertex and a fourth vertex among the four vertices, and a side of the material selecting frame is parallel to an edge of the image editing area, displaying the at least one edit control on the first selecting sub-frame includes:
displaying a first editing control associated with the first vertex at the first vertex, displaying a second editing control associated with the second vertex at the second vertex; displaying a third editing control at a position where a first side overlaps the first selecting sub-frame, and displaying a fourth editing control at a position where a second side overlaps the first selecting sub-frame;
in which the first side is connected to the third vertex, the second side is connected to the fourth vertex, the first side is parallel to the second side, and the third editing control is associated with the third vertex, and the fourth editing control is associated with the fourth vertex.

Optionally, the image editing area is rectangular, the first selecting sub-frame includes a first vertex among four vertices, the second selecting sub-frame includes a second vertex, a third vertex, and a fourth vertex among the four vertices, two sides connected with the third vertex are outside the image editing image, and a side of the material selecting frame is parallel to an edge of the image editing area, displaying the at least one editing control on the first selecting sub-frame includes:
displaying a first editing control associated with the first vertex on the first vertex, displaying a second editing control at a position where a third side overlaps the first selecting sub-frame, and displaying a third editing control and a fourth editing control at positions where a fourth side overlaps the first selecting sub-frames;
in which the third side is between the first vertex and the second vertex; the fourth side is between the first vertex and the fourth vertex; the second editing control is associated with the second vertex, the third editing control is associated with the third vertex, and the fourth editing control is associated with the fourth vertex.

Optionally, the image editing area is rectangular and four sides of the material selecting frame are not parallel to four edges of the image editing area, displaying the at least one editing control on the first selecting sub-frame includes:
displaying an editing control associated with a first target vertex on the first target vertex of the first selecting sub-frame, and displaying an editing control associated with a second target vertex at a target position of the first selecting sub-frame other than the first target vertex;
in which the first target vertex is at least one vertex among the four vertices, the second target vertex is a vertex on the second selecting sub-frame, and a direction from the second target vertex to the target position along the material selecting frame is clockwise or counterclockwise.

Optionally, the method includes:
in a case where a distance between each two adjacent editing controls is a distance threshold, in response to the dragging operation of the target material to the outside of the image editing area, moving the target material, the material selecting frame, and the at least one editing control along the trajectory of the dragging operation to the outside of the image editing area.

Optionally, the method includes:
in response to enlarging the target material and sides of the material selecting frame being outside the image editing area, displaying the at least one editing control at an edge position within the image editing area.

Optionally, the method includes:
in a case where the material selecting frame is within the image editing area in response to the dragging operation, displaying the at least one editing control on the material selecting frame, in which a relative position of the at least one editing control with respect to the material selecting frame remains unchanged.

Optionally, displaying the at least one editing control in the image editing area includes:
in a case where a part of the material selecting frame is in the image editing area in response to a dragging operation stop instruction, displaying the at least one editing control within the image editing area.

According to another aspect, an electronic device is provided. The electronic device includes:
a processor;
a memory configured to store instructions executable by the processor;
in which the processor is configured to execute the instructions to implement a method for displaying material as described above.

According to another aspect, a non-transitory computer-readable storage medium is provided. When instructions in the non-transitory computer-readable storage medium are executed by a processor of an electronic device, the electronic device is caused to execute a method for displaying material as described above.

It is to be understood that the foregoing general description and the following detailed description are exemplary and explanatory only and are not restrictive of the disclosure.

### BRIEF DESCRIPTION OF THE DRAWINGS

The accompanying drawings, which are incorporated into and constitute a part of this specification, illustrate embodiments consistent with the disclosure, and together with the description, to explain the principles of the disclosure and do not unduly limit the disclosure.
FIG. 1 is a schematic diagram illustrating an application environment according to an embodiment of the disclosure.
FIG. 2 is a flowchart illustrating a method for displaying material according to an embodiment of the disclosure.
FIGS. 3A to 3D are schematic diagrams illustrating a material editing page according to an embodiment of the disclosure.
FIG. 4 is a flowchart illustrating another method for displaying material according to an embodiment of the disclosure.
FIG. 5 is a schematic diagram of displaying an editing control according to an embodiment of the disclosure.
FIG. 6 is a schematic diagram illustrating an editing control according to an embodiment of the disclosure.
FIG. 7 is a schematic diagram illustrating an editing control according to an embodiment of the disclosure.
FIG. 8 is a schematic diagram illustrating an editing control according to an embodiment of the disclosure.
FIG. 9 is a schematic diagram illustrating an editing control according to an embodiment of the disclosure.
FIG. 10 is a block diagram illustrating a device for displaying material according to an embodiment of the disclosure.
FIG. 11 is a block diagram illustrating an electronic device for displaying material according to an embodiment of the disclosure.
FIG. 12 is a block diagram illustrating another electronic device for displaying material according to an embodiment of the disclosure.

### DETAILED DESCRIPTION

In order to make those skilled in the art well understand the technical solutions of the disclosure, the technical solutions according to embodiments of the disclosure will be clearly and completely described below with reference to the accompanying drawings.

It should be noted that the terms "first", "second" and the like in the description and claims of the disclosure and the above drawings are used to distinguish similar objects, and are not used to describe a specific sequence. It is to be understood that the data used with the above terms are interchangeable under appropriate circumstances such that the embodiments of the disclosure described herein can be implemented in sequences other than those illustrated or described herein. The implementations described in the illustrative examples below are not intended to represent all implementations consistent with this disclosure. Rather, they are merely examples of device and methods consistent with some aspects of the disclosure, as recited in the appended claims.

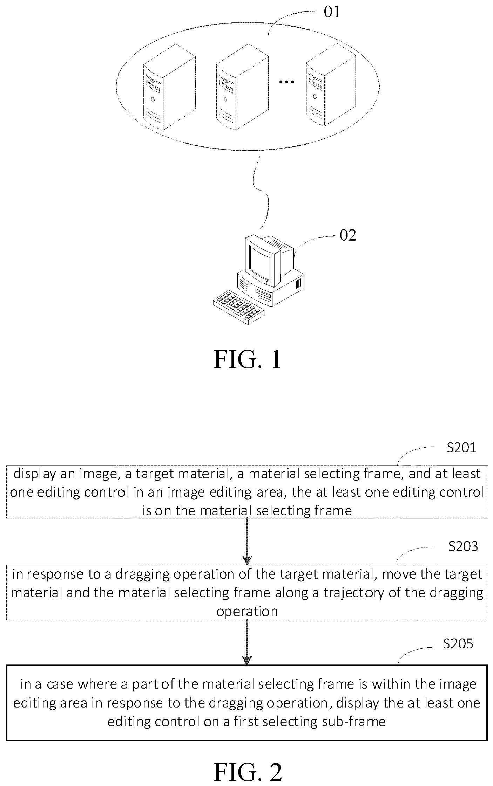

FIG. 1 is a schematic diagram illustrating an application environment according to an embodiment of the disclosure. As illustrated in FIG. 1, the application environment may include a server 01 and a terminal 02.

In an implementation, the server 01 may be configured to provide materials to be downloaded. For example, the server 01 may be an independent physical server, a server cluster including multiple physical servers, a distributed system, or a cloud server which may provide cloud services, cloud databases, cloud computing, cloud functions, cloud storage, network services, cloud communications, middleware services, domain name services, security services, content delivery network, CDN, and basic cloud computing services such as big data and artificial intelligence platforms.

In an implementation, the terminal 02 may be configured for displaying material processing. For example, the terminal 02 may include, but is not limited to, smart phones, desktop computers, tablet computers, laptop computers, smart speakers, digital assistants, augmented reality , AR/virtual reality, VR, devices, smart wearable equipment and other types of electronic devices. The operating system running on the electronic device may include, but is not limited to, an Android system, an IOS system, linux, windows, and the like.

In addition, it is to be noted that what illustrated in FIG. 1 is only an application environment of the method for displaying material according to the disclosure.

The above-mentioned server 01 and terminal 02 may be directly or indirectly connected through wired or wireless communication, which is not limited in the disclosure.

It is to be noted that, the accompanying drawings provide a possible sequence, but the disclosure is not actually limited to strictly follow this sequence. Some blocks can be executed in parallel without being dependent on each other. User information (including but not limited to user equipment information, user personal information, user behavior information, etc.) and data (including but not limited to data to be presented, training data, etc.) involved in this disclosure are all authorized by the user or all parties.

FIG. 2 is a flowchart illustrating a method for displaying material according to an embodiment of the disclosure. As illustrated in FIG. 2, the method includes the following.

In block S201, an image to be edited, a target material, a material selecting frame, and at least one editing control are displayed in an image editing area (canvas). The at least one editing control is on the material selecting frame.

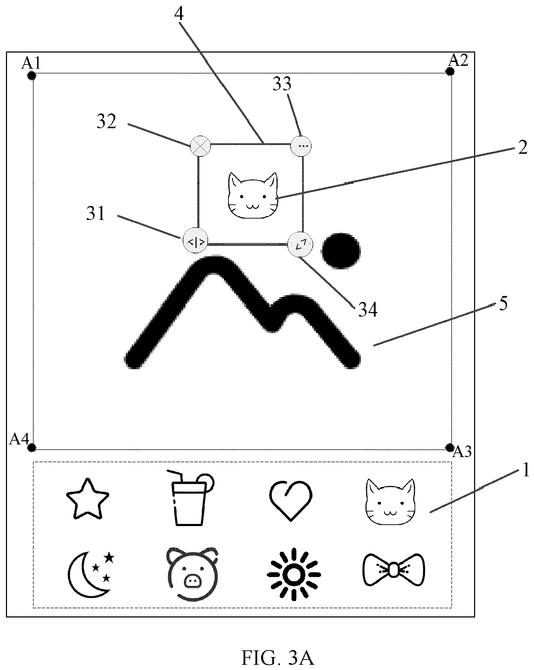

In an example, the target material may be within the material selecting frame. As illustrated in FIG. 3A, the target material is on the center of the material selecting frame. FIG. 3A further shows the image 5 to be edited, the target material 2, the material selecting frame 4, and the at least one editing control 31~34, such as " 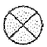 , 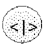 , 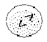 , 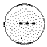 ".

As illustrated in FIG. 3A, the area enclosed by points A1, A2, A3, A4 may be the image editing area, and the image to be edited may occupy an entirety or a part of the image editing area. It is possible to not display indications (such as black dots in FIG. 3A) on the vertices corresponding to A1, A2, A3 and A4. In the following drawings, the indications on the vertices and dotted lines may not be displayed.

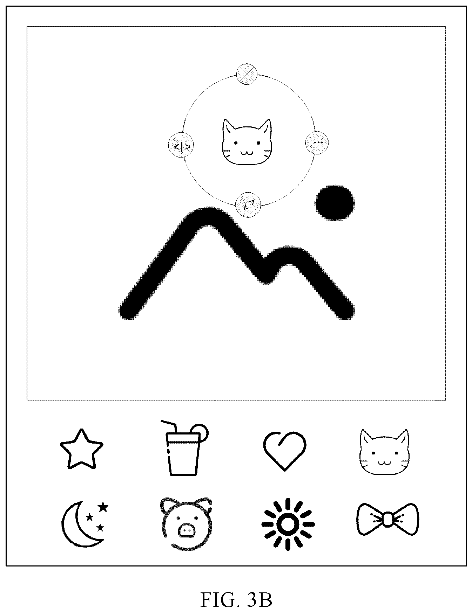

The at least one editing control may be configured to edit the target material. For example, the at least one editing control includes controls such as deleting, flipping, rotating, copying, and erasing the target material. In an example, as illustrated in FIGS. 3A and 3B, the material selecting frame may be rectangular or circular, which is not limited in the disclosure. As illustrated in FIG. 3A, the material selecting frame is rectangular, and the material selecting frame includes four vertices. The at least one editing control may include editing controls respectively associated with the four vertices, i.e., four editing controls. Correspondingly, the associated editing controls are displayed at the four vertices respectively. For example, in FIG. 3A, the control 31 " 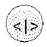 " associated with the first vertex may be a flipping control, the control 32 " 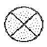 " associated with the second vertex may be a deleting control, and the control 34 " 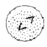 " associated with the fourth vertex may be a rotating control. The control 33 " 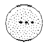 " associated with the third vertex can be a control with an editing function, such as a copying control; or " 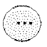 " can also be a set of controls with editing functions. For example, the controls contained in the set can be displayed by clicking the " 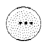 ". That is, multiple controls in the set, such as a copying control, an eraser control, and the like, can be displayed around the " 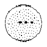 ". That is, when the number of positions for displaying the editing controls is smaller than the number of the editing controls, at least two editing controls can be displayed together. By displaying the editing controls at the four vertices, the editing operation of the material can be facilitated.

In some examples, before the block S201, the method may further include: in response to a material editing instruction, entering the material editing page. The material editing page may include an image editing area and a material selecting area. The image editing area is configured to display the image to be edited, and the material selecting area is configured to display multiple materials. The target material can be one of the multiple materials. The material selecting area 1 is illustrated in FIG. 3A.

Correspondingly, the block S201 may include in response to a material selecting instruction of the target material, displaying the target material, the material selecting frame, and the at least one editing control on the image to be edited, where the at least one editing control is on the material selecting frame. In other words, in an image editing application, when starting a material editing operation, the entered material editing page may include the image to be edited within the image editing area. Further, the image to be edited, the material selecting frame of the target material, the at least one editing control of the target material are displayed in the image editing area when the user selects the target material.

It is to be noted that the above block S201 is not only used to enter the material editing page of an image to be edited when starting the material editing operation, but also used to start incremental material editing of the image to be edited in an original material editing state. In this case, a rotation angle of the material selecting frame, a position of the target material, a position of the material selecting frame, and positions of the editing controls on the material editing page in the block S201 can be illustrated in any of the following figures, and are not limited to those illustrated in FIG. 3A.

In block S203, in response to a dragging operation of the target material, the target material and the material selecting frame are moved along a trajectory of the dragging operation.

In practical applications, when the user needs to edit the material, for example, dragging the material to a desired position, the target material can be dragged. Correspondingly, in response to the dragging operation of the target material, the target material and the material selecting frame can be moved along the trajectory of the dragging operation. During a process of moving the target material and the material selecting frame, the editing controls may also move along the trajectory of the dragging operation, or may not move along the trajectory of the dragging operation. The manner of the dragging operation is not limited in the disclosure. For example, the dragging operation may be implemented by touching the screen. In some examples, a part of the target material and a part of the material selecting frame outside the image editing area can be hidden, which is not limited in the disclosure.

In block S205, in a case where a part of the material selecting frame is within the image editing area in response to the dragging operation, the at least one editing control is displayed within the image editing area.

In some examples, in response to the dragging operation, that is, during the process of performing the dragging operation, a relative position of the material selecting frame with respect to the image editing area can be monitored. In the case where a part of the material selecting frame is within the image editing area (that is, a part of the material selecting frame is moved outside the image editing area or a side of the material selecting frame overlaps an edge of the image editing area), the at least one editing control can be displayed in the image editing area. In other words, in a case where a part of the material selecting frame is within the image editing area, all editing controls are displayed within the image editing area, thereby ensuring that all editing controls can be displayed within the image editing area all the time and in an effective editing state. The position where the at least one editing control is displayed in the image editing area is not limited in the disclosure, as long as the at least one editing control is in the image editing area.

In some examples, in the case where the material selecting frame is within the image editing area in response to the dragging operation, the at least one editing control is displayed on the material selecting frame. The relative position of the at least one editing control with respect to the material selecting frame remains unchanged. By keeping the relative positions of the material selecting frame, the at least one editing control, and the target material with respect to the image editing area unchanged, the editing operation of the material can be performed stably, the user's selection of the editing control is convenient, and the user operation experience is improved.

In an implementation, the block S205 may include in the case where a part of the material selecting frame is within the image editing area in response to a dragging operation stop instruction, displaying the at least one editing control within the image editing area. By setting the stop instruction, processing resources caused by the dragging operation can be reduced, and the processing efficiency can be improved.

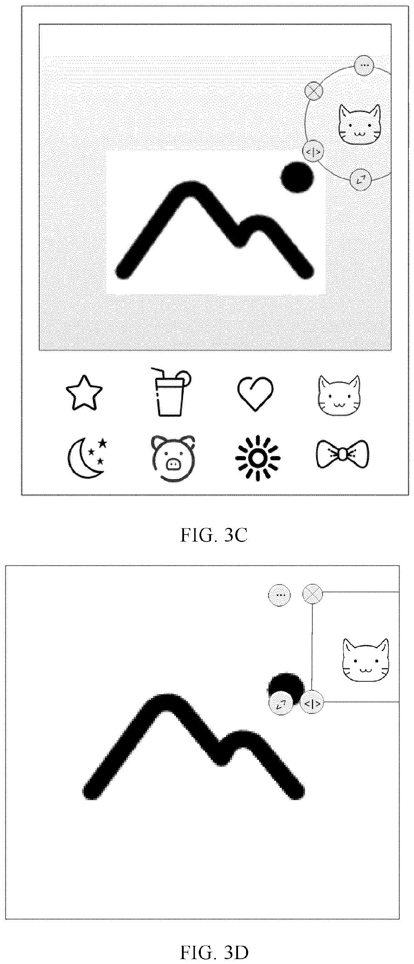

In one example, the user can select the target material and move the target material by touching a screen area corresponding to the image editing area and dragging the finger on the screen area (i.e., touching the screen to realize the dragging operation). At each starting time of the dragging operation, the electronic device starts to monitor touches on the screen is started. When no touch is detected on the screen, it can be considered that the dragging operation is over, such that the dragging operation stop instruction can be triggered. Accordingly, in response to the dragging operation stop instruction, a stop position of the material selecting frame can be monitored. In an example, in the case where a part of the material selecting frame is within the image editing area (that is, a part of the material selecting frame is moved to the outside of the image editing area or a side of the material selecting frame overlaps an edge of the image editing area), the at least one editing control may be displayed within the image editing area. For example, the at least one editing control can be displayed at a preset display area of the image editing area, as illustrated in FIGS. 3C or 3D. The preset display area corresponding to FIG. 3C can be the part of the material selecting frame within the image editing area, and the preset display area corresponding to FIG. 3D may be vertices and positions around the vertices of the part of the material selecting frame within the image editing area. The preset display area is not limited in the disclosure.

In another example, in the case where the material selecting frame is within the image editing area in response to the dragging operation stop instruction, the at least one editing control may be displayed on the material selecting frame. The relative position of the at least one editing control on the material selection frame keeps unchanged. In other words, when the entirety of the material selecting frame is within the image editing area at the ending of the dragging operation, the relative positions of the material selecting frame, the at least one editing control, and the target material can be the same with those illustrated in FIG. 3B. That is, when the material selecting frame is located in the image editing area, the presentation relationship between the material selecting frame, the at least one editing control, and the target material may remain unchanged.

During a process of moving the material, in a case where a part of the material selecting frame is within the image editing area, all editing controls are displayed in the image editing area. It can realize that all editing controls are within the image editing area all the time, which can improve the convenience of operating the material, improve the display flexibility of the editing controls related to the material, and improve the interaction effect in the process of editing the material.

In an implementation, in a case where a part of the material selecting frame is within the image editing area, the at least one editing control may be displayed in the preset display area of the image editing area. The preset display area can be an edge area of the image editing area or an area illustrated in FIG. 3D, or the preset display area may be a first selecting sub-frame, which is not limited in the disclosure. The first selecting sub-frame can be the part of the material selecting frame within the image editing area. By still displaying the editing controls on the material selecting frame, the user's operating habit of the editing controls can be maintained, and the user's operating experience can be improved.

In an example, the block S205 may include the following.

In block S401, in a case where a second selecting sub-frame has an associated editing control, the at least one editing control is displayed on the first selecting sub-frame. The second selecting sub-frame is a part of the material selecting frame outside the image editing area, and the associated editing control is displayed on the second selecting sub-frame in a case where the second selecting sub-frame is within the image editing area. In other words, when the second selecting sub-frame is within the image editing area, the editing control displayed on the second selecting sub-frame can be regarded as the associated editing control of the second selecting sub-frame.

A part of the material selecting frame other than the first selecting sub-frame is the second selecting sub-frame.

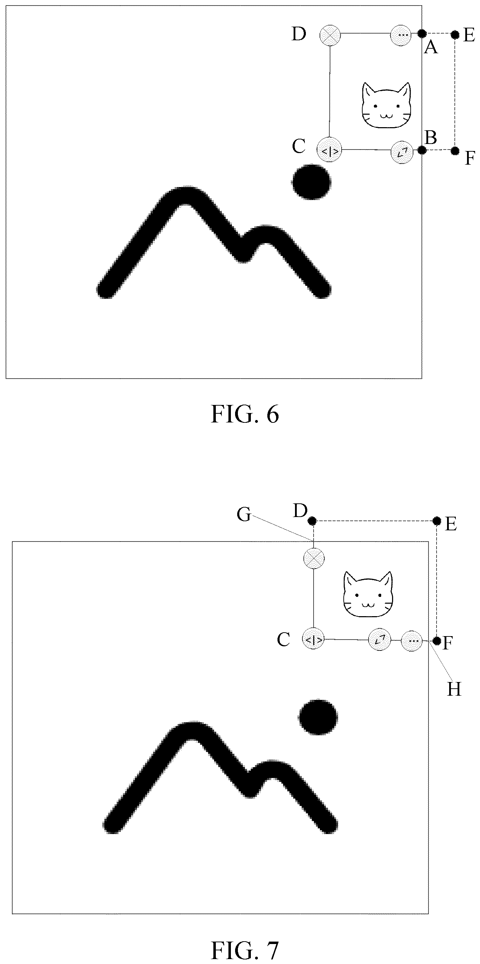

As illustrated in FIG. 6, the first selecting sub-frame is the part from the point A to the point B of the material selecting frame. As illustrated in FIG. 3A, if still displaying the editing controls 33 and 34 on the associated vertices, the editing controls 33 and 34 would be outside the image editing area and thus would be hidden or occluded. Based on embodiments of the disclosure, the editing controls 33 and 34 can be displayed on sides of the first selecting sub-frame, as illustrated in FIGS. 3 and 6-8. The editing controls 31 and 32 may still be displayed on the associated vertices. Distances between the editing controls 33 and 34 and a target edge of the image editing area are preset distance, and the target edge divides the material selecting frame into a first selecting sub-frame and a second selecting sub-frame. As illustrated in FIG. 6, the target edge may be an edge where the point A and the point B are located in the image editing area.

In some examples, in a case where the second selecting sub-frame does not have the associated editing control, the relative position of the editing control with respect to the material selecting frame can be kept unchanged.

By displaying, on the first selecting sub-frame within the image editing area, the editing controls moved outside the image editing area in a case where the second selecting sub-frame has the associated editing control, it can be ensured that all editing controls are visible, which is easy to operate. By adding a limitation that the second selecting sub-frame has the associated editing control, unnecessary display control can be avoided and processing resources can be saved.

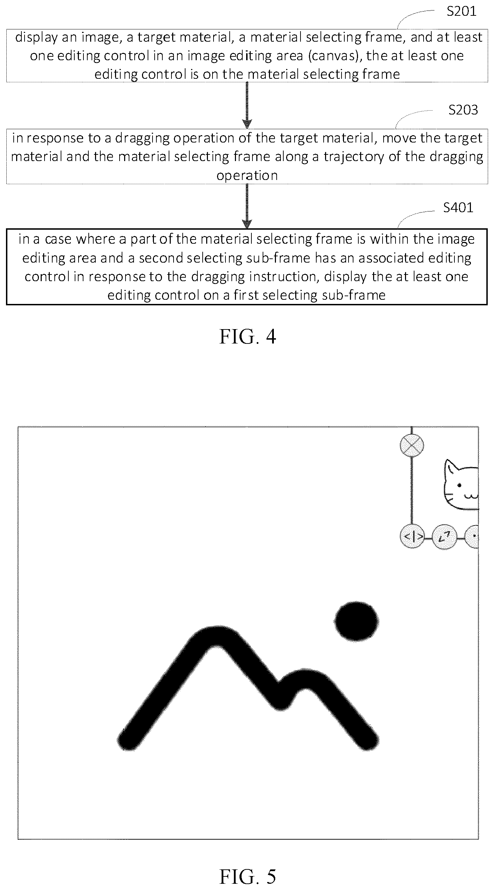

In an implementation, a limit value can be set for a distance between adjacent editing controls, such as a distance threshold. When the distance between each adjacent editing controls is the distance threshold, in response to the dragging operation of the target material to the outside of the image editing area, the target material, the material selecting frame, and the at least one editing control can be moved along the trajectory of the dragging operation in a preset direction. As illustrated in FIG. 5, any one of the target material, the material selecting frame, and the at least one editing control is hidden when it moves to the outside of the image editing area. Using this distance threshold to limit the distance between adjacent editing controls can ensure the effective operation of the editing controls.

As illustrated in FIG. 6, in an implementation, the image editing area may be rectangular, the first selecting sub-frame includes a first vertex C and a second vertex D among the four vertices, the second selecting sub-frame includes a third vertex E and a fourth vertex F among the four vertices, and a side of the material selecting frame is parallel to an edge of the image editing area. In this case, the block S401 may include displaying a first editing control on the first vertex, displaying a second editing control on the second vertex, displaying a third editing control at a position where a first side overlaps the first selecting sub-frame, and displaying a fourth editing control at a position where a second side overlaps the first selecting sub-frame.

The first side DE is connected to the third vertex E, the second side CF is connected to the fourth vertex F, and the first side is parallel to the second side. The position where the first side overlaps the first selecting sub-frame may be any one position on the line segment AD illustrated in FIG. 6, and the position where the second side overlaps the first selecting sub-frame may be any one position on the line segment BC illustrated in FIG. 6.

In some examples, the distance between the third editing control and a target edge of the image editing area and the distance between the fourth editing control and the target edge of the image editing area may be the preset distance, which is not limited in the disclosure. The target edge may be an edge where a point A and a point B in the edge of the image editing area are located. The target edge divides the material selecting frame into two parts, i.e., the first selecting sub-frame and the second selecting sub-frame.

In moving the editing control outside the image editing area, the editing control outside the image editing area is displayed on an edge position of the image editing area, such that the relative position of the editing control is similar to that before it does not move outside the image editing area, which is convenient for the user to operate.

As illustrated in FIG. 7, in an implementation, the image editing area may be rectangular, the first selecting sub-frame includes the first vertex C, and the second selecting sub-frame includes the second vertex D, the third vertex E, and the fourth vertex F. Two sides connected to the third vertex E are outside the image editing image, and a side of the material selecting frame is parallel to an edge of the image editing area. That is, the three vertices of the material selecting frame are outside the image editing area, and the material selecting frame is in a horizontal and vertical state. The horizontal and vertical state refers to that each side of the material selecting frame is parallel to a corresponding edge of the image editing area. In this case, the block S401 may include displaying the first editing control at the first vertex, displaying the second editing control at the position (i.e., on the line segment CG) where a third side overlaps the first selecting sub-frame, and displaying the third and fourth editing controls at the position (i.e., on the line segment CH) where a fourth side overlaps the first selecting sub-frame. The third side is the side CD between the first vertex and the second vertex, and the fourth side is the side CF between the first vertex and the fourth vertex, as illustrated in FIG. 7.

When the material selecting frame is in the horizontal and vertical state and three vertices are outside the image editing area, the display flexibility of the editing controls can be improved through the differentiated display in a case where two vertices are outside the image editing area.

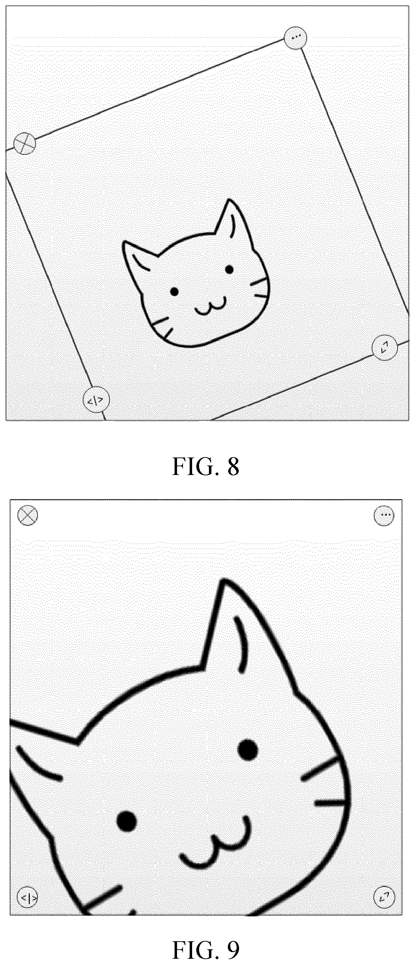

As illustrated in FIG. 8 , in an implementation, the image editing area is rectangular, and the four sides of the material selecting frame are not parallel to the four edges of the image editing area, the block S401 may include displaying an editing control associated with a first target vertex on a first target vertex of the first selecting sub-frame, and displaying an editing control associated with a second target vertex at a target position of the first selecting sub-frame except the first target vertex.

The first target vertex is at least one vertex among the four vertices, the second target vertex is a vertex on the second selecting sub-frame, and the second selecting sub-frame is a part of the material selecting frame except the first selecting sub-frame. A direction from the second target vertex to the target position along the material selection frame is clockwise or counterclockwise, as illustrated in FIG. 8.

By displaying the editing controls in a clockwise or counterclockwise manner, the display diversity of the editing controls can be improved.

In an implementation, the method may further include, in response to enlarging the target material and the sides of the material selecting frame being all outside the image editing area, displaying the at least one editing control at an edge position of the image editing area. As illustrated in FIG. 9, when the image editing area is rectangular, the edge position may be at least one position located on at least one corner of the image editing area and distanced from the edge of the image editing area by a preset distance.

By flexibly displaying the editing controls when the target material is enlarged, convenient operation of the editing controls can be realized, and visual interference to the target material can be avoided.

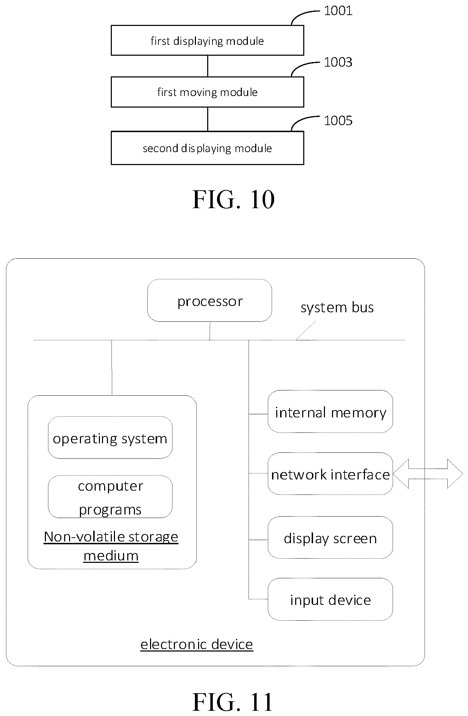

FIG. 10 is a block diagram illustrating a device for displaying material presentation according to an embodiment of the disclosure. As illustrated in FIG. 10, the device may include a first displaying module 1001, a first moving module 1003, and a second displaying module 1005.

The first displaying module 1001 is configured to display an image to be edited, a target material, a material selecting frame, and at least one editing control in an image editing area; in which the at least one editing control is on the material selecting frame and the target material is within the material selecting frame.

The first moving module 1003 is configured to move the target material and the material selecting frame along a trajectory of the dragging operation in response to a dragging operation of the target material.

The second displaying module 1005 is configured to display the at least one editing control in the image editing area, in a case where a part of the material selecting frame is within the image editing area in response to the dragging operation.

In a possible implementation, the second displaying module 1005 includes: a second editing control displaying unit, configured to display the at least one editing control on a first selecting sub-frame, in the case where the part of the material selecting frame is within the image editing area in response to the dragging operation. The first selecting sub-frame is the part of the material selecting frame within the image editing area.

In a possible implementation, the second editing control displaying unit includes a presentation subunit configured to display the at least one editing control on the first selecting sub-frame, in a case where a second selecting sub-frame has an associated editing control; in which the second selecting sub-frame is a part of the material selecting frame outside the image editing area, and the associated editing control is displayed on the second selecting sub-frame in a case where the second selecting sub-frame is within the image editing area.

In a possible implementation, the material selecting frame is rectangular, the material selecting frame includes four vertices, and the at least one editing control includes respective editing controls associated with the four vertices. The first displaying module 1001 includes a first editing control displaying unit configured to display the respective editing controls on the four vertices.

In a possible implementation, the image editing area is rectangular, the first selecting sub-frame includes a first vertex and a second vertex among the four vertices, and the second selecting sub-frame includes a third vertex and a fourth vertex among the four vertices, and a side of the material selecting frame is parallel to an edge of the image editing area. In this case, the second editing control displaying unit includes a first displaying subunit configured to display a first editing control associated with the first vertex at the first vertex, display a second editing control associated with the second vertex at the second vertex; display a third editing control at a position where the first side overlaps the first selecting sub-frame, and display a fourth editing control at a position where a second side overlaps the first selecting sub-frame.

The first side is connected to the third vertex, the second side is connected to the fourth vertex, the first side is parallel to the second side, and the third editing control is associated with the third vertex, and the fourth editing control is associated with the fourth vertex.

In a possible implementation, the image editing area is rectangular, the first selecting sub-frame includes a first vertex among the four vertices, the second selecting sub-frame includes a second vertex, a third vertex, and a fourth vertex among the four vertices, two sides connected with the third vertex are both outside the image editing image, and a side of the material selecting frame is parallel to an edge of the image editing area. In this case, the second editing control displaying unit includes a second displaying subunit configured to display a first editing control associated with the first vertex on the first vertex, display a second editing control at a position where a third side overlaps the first selecting sub-frame, and display a third editing control and a fourth editing control at positions where a fourth side overlaps the first selecting sub-frames.

The third side is between the first vertex and the second vertex; the fourth side is between the first vertex and the fourth vertex; the second editing control is associated with the second vertex, the third editing control is associated with the third vertex, and the fourth editing control is associated with the fourth vertex.

In a possible implementation, the image editing area is rectangular and four sides of the material selecting frame are not parallel to four edges of the image editing area.

In this case, the second editing control displaying unit includes a third displaying subunit configured to display an editing control associated with a first target vertex on the first target vertex of the first selecting sub-frame, and display an editing control associated with a second target vertex at a target position of the first selecting sub-frame other than the first target vertex.

The first target vertex is at least one vertex among four vertices, the second target vertex is a vertex on the second selecting sub-frame, and a direction from the second target vertex to the target position along the material selecting frame is clockwise or counterclockwise.

In a possible implementation, the device further includes: a second moving module, configured to move the target material, the material selecting frame, and the at least one editing control along the trajectory of the dragging operation to the outside of the image editing area, in response to the dragging operation of the target material to the outside of the image editing area in a case where a distance between each two adjacent editing controls is a distance threshold.

In a possible implementation, the device further includes: a third displaying module, configured to display the at least one editing control at an edge position within the image editing area, in response to enlarging the target material and sides of the material selecting frame being outside the image editing area.

In a possible implementation, the device further includes: a fourth displaying module, configured to display the at least one editing control on the material selecting frame, in a case where the material selecting frame is within the image editing area in response to the dragging operation. A relative position of the at least one editing control with respect to the material selecting frame remains unchanged.

In a possible implementation, the second displaying module 1005 includes: a displaying unit, configured to display the at least one editing control within the image editing area, in a case where a part of the material selecting frame is in the image editing area in response to a dragging operation stop instruction.

Regarding the device in the above-mentioned embodiments, the specific manner in which each module performs operations has been described in detail in the method embodiments, and will not be described in detail here.

FIG. 11 is a block diagram illustrating an electronic device used for displaying material according to an embodiment of the disclosure. The electronic device may be a terminal, and its internal structure diagram may be as illustrated in FIG. 11. The electronic device includes a processor, a memory, a network interface, a display screen, and an input device. The processor, the memory, the network interface, the display screen and the input device are connected by a system bus. The processor of the electronic device is configured to provide computing and control capabilities. The memory of the electronic device includes a non-volatile storage medium and an internal memory. The non-volatile storage medium has an operating system and computer programs. The internal memory provides an environment for the execution of the operating system and computer programs in the non-volatile storage medium. The network interface of the electronic device is configured to communicate with an external terminal through a network connection. The computer program, when executed by the processor, implements a method for displaying material. The display screen of the electronic device can be a liquid crystal display screen or an electronic ink display screen. The input device of the electronic device can be a touch layer covered on the display screen, or a button, a trackball or a touchpad set on the shell of the electronic device, or an external keyboard, trackpad, or mouse.

Those skilled in the art can understand that the structure illustrated in FIG. 11 is only a block diagram of a partial structure related to the solution of the disclosure, and does not constitute a limitation on the electronic device to which the solution of the disclosure is applied. The specific electronic device may include more or fewer components than illustrated in the figures, or combine certain components, or have a different arrangement of components.

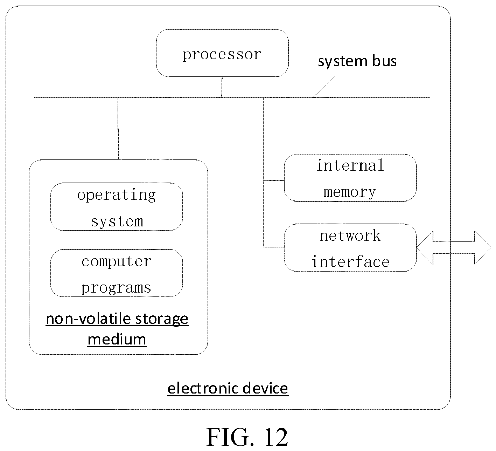

FIG. 12 is a block diagram illustrating another electronic device for displaying material according to an embodiment of the disclosure. The electronic device may be a server, and its internal structure diagram may be as illustrated in FIG. 12. The electronic device includes a processor, a memory, and a network interface connected by a system bus. The processor of the electronic device is configured to provide computing and control capabilities. The memory of the electronic device includes a non-volatile storage medium and an internal memory. The non-volatile storage medium has an operating system and computer programs. The internal memory provides an environment for the execution of the operating system and computer programs in the non-volatile storage medium. The network interface of the electronic device is configured to communicate with an external terminal through a network connection. The computer program, when executed by the processor, implements a method for displaying material.

Those skilled in the art can understand that the structure illustrated in FIG. 12 is only a block diagram of a partial structure related to the solution of the disclosure, and does not constitute a limitation on the electronic device to which the solution of the disclosure is applied. The specific electronic device may include more or fewer components than illustrated in the figures, or combine certain components, or have a different arrangement of components.

In an embodiment, there is also provided an electronic device. The electronic device includes a processor; a memory for storing instructions executable by the processor. The processor is configured to execute the instructions to implement a method for displaying material as described above.

In an embodiment, a computer-readable storage medium is also provided. When the instructions in the computer-readable storage medium are executed by a processor of an electronic device, the electronic device can execute the method for displaying material as describe above. The computer-readable storage medium may be ROM, random access memory (RAM), CD-ROM, magnetic tape, floppy disk, optical data storage device, and the like.

In an embodiment, there is also provided a computer program product having instructions. When executed on a computer, the instructions cause the computer to perform the method for displaying material as described above.

Those of ordinary skill in the art can understand that all or part of the processes in the methods of the above embodiments can be implemented by instructing relevant hardware through a computer program, and the computer program can be stored in a non-volatile computer-readable storage medium. When the computer program is executed, it may include the processes of the above-mentioned method embodiments. Any reference to memory, storage, database or other medium used in the various embodiments of the disclosure may include non-volatile and/or volatile memory. Nonvolatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM), etc.

Other embodiments of the disclosure will readily occur to those skilled in the art upon consideration of the specification and practice of the disclosure here. This disclosure is intended to cover any variations, uses, or adaptations of the disclosure that follow the general principles of the disclosure and include common knowledge or techniques in the technical field not disclosed by the disclosure.

It is to be understood that the disclosure is not limited to the precise structures described above and illustrated in the accompanying drawings, and that various modifications and changes may be made without departing from the scope thereof. The scope of the disclosure is limited only by the appended claims.

## Claims

1. A method for displaying material, comprising:
displaying (S201) an image (5), a target material (2), a material selecting frame (4), and at least one editing control (31, 32, 33, 34) in an image editing area, wherein the at least one editing control (31, 32, 33, 34) is on the material selecting frame (4), and the target material (2) is within the material selecting frame (4);
in response to a dragging operation of the target material (2), moving (S203) the target material (2) and the material selecting frame (4) along a trajectory of the dragging operation; and
in a case where a part of the material selecting frame (4) is within the image editing area in response to the dragging operation, displaying (S205) the at least one editing control (31, 32, 33, 34) in the image editing area.

2. The method of claim 1, wherein said displaying (S205) the at least one editing control (31, 32, 33, 34) in the image editing area comprises:
displaying the at least one editing control (31, 32, 33, 34) on a first selecting sub-frame;
wherein, the first selecting sub-frame is the part of the material selecting frame (4) within the image editing area.

3. The method of claim 2, wherein said displaying (S205) the at least one editing control (31, 32, 33, 34) on the first selecting sub-frame comprises:
in a case where a second selecting sub-frame has an associated editing control (31, 32), displaying (S401) the at least one editing control (31, 32, 33, 34) on the first selecting sub-frame;
wherein the second selecting sub-frame is a part of material selecting frame (4) outside the image editing area, and the associated editing control (31, 32) is displayed on the second selecting sub-frame in a case where the second selecting sub-frame is within the image editing area.

4. The method of claim 3, wherein the material selecting frame (4) is rectangular, the material selecting frame (4) comprises four vertices (C, D, E, F), and the at least one editing control (31, 32, 33, 34) comprises respective editing controls (31, 32, 33, 34) associated with the four vertices (C, D, E, F), said displaying (S205) the at least one editing control (31, 32, 33, 34) on the material selecting frame (4) comprises:
displaying the respective editing controls (31, 32, 33, 34) on the four vertices.

5. The method of claim 4, wherein the image editing area is rectangular, the first selecting sub-frame comprises a first vertex (C) and a second vertex (F) among four vertices (C, D, E, F), and the second selecting sub-frame comprises a third vertex (E) and a fourth vertex (F) among the four vertices (C, D, E, F), and a side of the material selecting frame (4) is parallel to an edge of the image editing area, said displaying (S401) the at least one edit control (31, 32, 33, 34) on the first selecting sub-frame comprises:
displaying a first editing control (31) associated with the first vertex (C) at the first vertex (C), displaying a second editing control (32) associated with the second vertex (D) at the second vertex (D); displaying a third editing control (33) at a position where a first side overlaps the first selecting sub-frame, and displaying a fourth editing control (34) at a position where a second side overlaps the first selecting sub-frame;
wherein, the first side is connected to the third vertex (E), the second side is connected to the fourth vertex (F), the first side is parallel to the second side, and the third editing control (33) is associated with the third vertex (E), and the fourth editing control (34) is associated with the fourth vertex (F).

6. The method of claim 4, wherein the image editing area is rectangular, the first selecting sub-frame comprises a first vertex (C) among four vertices (C, D, E, F), the second selecting sub-frame comprising a second vertex (D), a third vertex (E), and a fourth vertex (F) among the four vertices (C, D, E, F), two sides connected with the third vertex (E) are outside the image editing image, and a side of the material selecting frame (4) is parallel to an edge of the image editing area, said displaying (S401) the at least one editing control (31, 32, 33, 34) on the first selecting sub-frame comprises:
displaying a first editing control (31) associated with the first vertex (C) on the first vertex (C), displaying a second editing control (32) at a position where a third side overlaps the first selecting sub-frame, and displaying a third editing control (33) and a fourth editing control (34) at positions where a fourth side overlaps the first selecting sub-frames;
wherein, the third side is between the first vertex (C) and the second vertex (D); the fourth side is between the first vertex (C) and the fourth vertex (F); the second editing control (32) is associated with the second vertex (D), the third editing control (33) is associated with the third vertex (E), and the fourth editing control (34) is associated with the fourth vertex (F).

7. The method of claim 4, wherein the image editing area is rectangular and four sides of the material selecting frame (4) are not parallel to four edges of the image editing area, said displaying (S401) the at least one editing control (31, 32, 33, 34) on the first selecting sub-frame comprises:
displaying an editing control associated with a first target vertex on the first target vertex of the first selecting sub-frame, and displaying an editing control associated with a second target vertex at a target position of the first selecting sub-frame other than the first target vertex;
wherein, the first target vertex is at least one vertex among the four vertices, the second target vertex is a vertex on the second selecting sub-frame, and a direction from the second target vertex to the target position along the material selecting frame (4) is clockwise or counterclockwise.

8. The method of any one of claims 2 to 7, further comprising:
in a case where a distance between each two adjacent editing controls is a distance threshold, in response to the dragging operation of the target material (2) to the outside of the image editing area, moving the target material (2), the material selecting frame (4), and the at least one editing control (31, 32, 33, 34) along the trajectory of the dragging operation to the outside of the image editing area.

9. The method of any one of claims 1 to 8, further comprising:
in response to enlarging the target material (2) and sides of the material selecting frame (4) being outside the image editing area, displaying the at least one editing control (31, 32, 33, 34) at an edge position within the image editing area.

10. The method of any one of claims 1 to 9, further comprising:
in a case where the material selecting frame (4) is within the image editing area in response to the dragging operation, displaying the at least one editing control (31, 32, 33, 34) on the material selecting frame (4), wherein a relative position of the at least one editing control with (31, 32, 33, 34) respect to the material selecting frame (4) remains unchanged.

11. The method of any one of claims 1 to 10, wherein said displaying (S205) the at least one editing control (31, 32, 33, 34) in the image editing area comprises:
in a case where a part of the material selecting frame (4) is in the image editing area in response to a dragging operation stop instruction, displaying the at least one editing control (31, 32, 33, 34) within the image editing area.

12. An electronic device, comprising:
a processor;
a memory configured to store instructions executable by the processor;
wherein, the processor is configured to execute a method for displaying material of any one of claims 1 to 11.

13. A non-transitory computer-readable storage medium, wherein when instructions in the computer-readable storage medium are executed by a processor of an electronic device, the electronic device is caused to execute a method for displaying material of any one of claims 1 to 11.
